# EUROPEAN PATENT APPLICATION

(11) **EP 4 506 154 A1**
(43) Date of publication of application: **12.02.2025**
(21) Application number: 24192242.6
(22) Date of filing: 01.08.2024
(51) Int. Cl.: B32B 5/18, B32B 5/24, B32B 27/06, B32B 27/36, B32B 27/38, B32B 27/08

(54) **MULTILAYERED MATERIAL, ESPECIALLY FOR BUILDING CONSTRUCTION, AND ITS METHOD OF MANUFACTURE**

(30) Priority: 07.08.2023 IT 202300016779
(71) Applicant: Atelier23 Srl, 20121 Milano (IT)
(72) Inventor: GHEORMA, Mihaela, 30038 SPINEA VE (IT)
(74) Representative: Modiano, Micaela Nadia

(57) **Abstract**

A multilayer material (10) which comprises:
- a first layer (11) made of gelcoat,
- a second layer (12) made of virgin fiberglass reinforced plastic,
- a third layer (13) based on a mixture comprising recycled fiberglass reinforced plastic fragments embedded in a resin.

## Description

The present invention relates to a multilayer material, particularly for built structures.

The invention also relates to a method for providing said multilayer material.

The invention is used particularly in the field of built structures, for example in the field of the construction of street furniture.

However, the invention can also be used in other fields.

Fiberglass reinforced plastic is widely used today to provide a considerable number of structures.

Fiberglass reinforced plastic is a composite material which comprises glass fibers which are embedded in a resin, usually an epoxy resin.

This material is widely used in various industrial sectors, from buildings to boat building.

The widespread use of fiberglass reinforced plastic in these fields is mainly tied to:
- its considerable properties of:
- mechanical strength (tensile strength, compression strength, flexural strength),
- wear resistance,
- weatherability,
- its extreme malleability, which allows to provide substantially any kind of shape.

However, fiberglass reinforced plastic has the drawback that it is not recyclable or can be recycled with difficulty and only to a minimal extent.

Because of this, when products made of fiberglass reinforced plastic reach end of life, a considerable amount of waste and a significant storage volume of this waste in landfills is generated, with a considerable environmental impact.

The aim of the present invention is to provide a multilayer material that is capable of improving the background art in one or more of the aspects indicated above.

Within this aim, an object of the invention is to provide a multilayer material based on fiberglass reinforced plastic that allows its full recycling by reducing/eliminating the amount of waste produced at end of life.

Another object of the invention is to provide a multilayer material which has better mechanical properties of mechanical strength, impact strength, weatherability with respect to those of fiberglass reinforced plastic, for an equal thickness.

A further object of the present invention is to overcome the drawbacks of the background art in a manner that is alternative to any existing solutions.

Another object of the invention is to provide a multilayer material that is highly reliable, relatively easy to provide and at competitive costs.

This aim, as well as these and other objects which will become better apparent hereinafter, are achieved by a multilayer material, characterized in that it comprises:
- a first layer made of gelcoat,
- a second layer made of virgin fiberglass reinforced plastic,
- a third layer based on a mixture comprising recycled fiberglass reinforced plastic fragments embedded in a resin.

This aim, as well as these and other objects which will become better apparent hereinafter, are achieved by a method for providing such a multilayer material.

Further characteristics and advantages of the invention will become better apparent from the description of a preferred but not exclusive embodiment of the multilayer material according to the invention, illustrated by way of non-limiting example in the accompanying drawings, wherein:

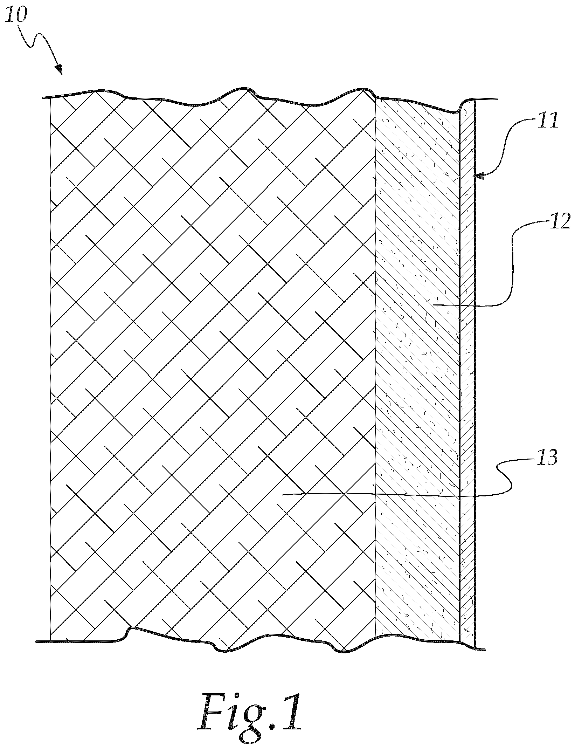

Figure 1 is a schematic sectional view of a multilayer material according to the invention.

With reference to the figure, a multilayer material according to the invention is generally designated by the reference numeral 10.

One of the particularities of the material 10 consists in that it comprises:
- a first layer 11 made of gelcoat,
- a second layer 12 made of virgin fiberglass reinforced plastic,
- a third layer 13 based on a mixture comprising recycled fiberglass reinforced plastic fragments embedded in a resin.

In the present description, the term "virgin" means that the fiberglass reinforced plastic has not undergone further processes, interventions or modifications after its hardening, differently from recycled fiberglass reinforced plastic, which is instead subjected to operations and treatments for its recovery.

Such first layer 11 has a thickness substantially comprised between 1 mm and 5 mm.

Preferably, the first layer 11 has a thickness of less than 2 mm, even more preferably on the order of 1 mm.

The second layer 12 has a thickness substantially comprised between 2 mm and 10 mm.

Preferably, the second layer 12 has a thickness substantially comprised between 2 mm and 5 mm.

The third layer 13 has a thickness substantially comprised between 10 mm and 80 mm.

Preferably, the third layer 13 has a thickness substantially comprised between 10 mm and 50 mm.

The second layer 12 comprises glass fibers embedded in polyester resin and/or epoxy resin.

Such third layer 13 comprises recycled fiberglass reinforced plastic fragments having a granular and/or spherical shape, which have a diameter substantially comprised between 2 mm and 7 mm.

The fragments are obtained by crushing and then screening the fiberglass reinforced plastic, for example obtained from products at end of life.

The resin of the third layer 13 is polyester resin and/or epoxy resin.

It should be noted that the material 10 according to the invention is fully recyclable and has a percentage of recycled fiberglass reinforced plastic of at least 50% by weight.

Preferably, the material 10 has a percentage of recycled fiberglass reinforced plastic comprised between 50% and 80% by weight.

It should also be noted that the material 10 complies with the Criteri Ambientali Minimi or CAM (minimum environmental criteria) prescribed by current legislation: L221/2015, article 34 of Legislative Decree 50/2016 "Codice degli appalti" (Procurement Code, amended by Legislative Decree 56/2017).

Moreover, it should be noted that the third layer 13 allows the material 10 to have properties of mechanical strength, water resistance, impact strength and weatherability which are superior to those of ordinary fiberglass reinforced plastic, for an equal thickness.

The present invention also relates to the method for providing the material 10, which comprises the steps of:
- depositing a layer of gelcoat in a mold to provide the first layer 11,
- providing the second layer 12 on the first layer 11 by laminating a layer of virgin fiberglass reinforced plastic on said layer 11, in a per se known manner,
- mixing recycled fiberglass reinforced plastic fragments and resin to form a mixture,
- spreading the mixture on the second layer 12,
- making said spread mixture harden to obtain the third layer 13 and the material 10.

In particular, the operation for spreading the mixture of the third layer 13 can occur manually or by means of adapted automated deposition means. The operation of laminating the second layer 12 occurs manually.

The operation of depositing the gelcoat of the first layer 11 can occur manually or by using adapted sprayers.

In practice it has been found that the invention achieves the intended aim and objects, providing a multilayer material based on fiberglass reinforced plastic that allows its full recycling, by reducing/eliminating the amount of waste produced at end of life.

The invention provides a multilayer material that has better properties of mechanical strength, impact strength and weatherability than fiberglass reinforced plastic for an equal thickness.

The material is suitable particularly but not exclusively for built structures.

The invention thus conceived is susceptible of numerous modifications and variations, all of which are within the scope of the accompanying claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application no. 102023000016779, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A multilayer material (10), **characterized in that** it comprises:
- a first layer (11) made of gelcoat,
- a second layer (12) made of virgin fiberglass reinforced plastic,
- a third layer (13) based on a mixture comprising recycled fiberglass reinforced plastic fragments embedded in a resin.

2. The material (10) according to claim 1, **characterized in that** said first layer (11) has a thickness substantially comprised between 1 mm and 5 mm.

3. The material (10) according to one or more of the preceding claims, **characterized in that** said second layer (12) has a thickness substantially comprised between 2 mm and 10 mm.

4. The material (10) according to one or more of the preceding claims, **characterized in that** said third layer (13) has a thickness substantially comprised between 10 mm and 80 mm.

5. The material (10) according to one or more of the preceding claims, **characterized in that** said third layer (13) comprises recycled fiberglass reinforced plastic fragments having a granular and/or spherical shape.

6. The material (10) according to one or more of the preceding claims, **characterized in that** said recycled fiberglass reinforced plastic fragments have a diameter substantially comprised between 2 mm and 7 mm.

7. The material (10) according to one or more of the preceding claims, **characterized in that** said resin of said third layer (13) is polyester resin and/or epoxy resin.

8. The material (10) according to one or more of the preceding claims, **characterized in that** it is fully recyclable and has a percentage of recycled fiberglass reinforced plastic of at least 50% by weight.

9. A method for the provision of a multilayer material (10) comprising a first layer (11), a second layer (12) and a third layer (13), said method consisting in:
- depositing a layer of gelcoat in a mold to provide said first layer (11),
- providing said second layer (12) on said first layer (11) by laminating on said first layer (11) a layer of virgin fiberglass reinforced plastic,
- mixing recycled fiberglass reinforced plastic fragments and resin to form a mixture,
- spreading said mixture on said second layer (12),
- making said mixture harden to obtain said third layer (13) and said material (10).
